# EUROPÄISCHE PATENTSCHRIFT

(11) **EP 0 538 743 B1**
(45) Veröffentlichungstag und Bekanntmachung des Hinweises auf die Patenterteilung: **11.09.1996**
(21) Anmeldenummer: 92117684.8
(22) Anmeldetag: 16.10.1992
(51) Int. Cl.: F16H 1/28, F16H 1/46, F16H 57/02, H02K 7/116

(54) **Motor-Getriebe-Einheit mit einem von einem Elektromotor angetriebenen Planeten-Zahnradgetriebe**
Motor-gear-unit with a planetary gearing driven by an electric motor
Groupe de moteur et engrenage planétaire entraîné par moteur électrique

(30) Priorität: 20.10.1991 DE 4134553
(43) Veröffentlichungstag der Anmeldung: 28.04.1993
(73) Patentinhaber: GSC Schwörer GmbH, D-79871 Eisenbach (DE); THYSSEN AUFZÜGE GMBH, D-73765 Neuhausen a.d.F. (DE)
(72) Erfinder: Orlowski, Bernhard, W-7000 Stuttgart 1 (DE)
(74) Vertreter: Pfusch, Volker, Dipl.-Ing.

(56) Entgegenhaltungen:
- CH-A- 116 668
- FR-A- 1 302 143
- GB-A- 926 920
- US-A- 4 092 946

## Beschreibung

Die Erfindung betrifft von einem Elektromotor angetriebene Planeten-Zahnradgetriebe.

Aus der FR-A-1 302 143 ist eine Motor-Getriebe-Einheit bekannt wie folgt:
a) mit einem von einem Elektromotor angetriebenen PlanetenZahnrad-Getriebe, mit einem den Motor und zumindest einen Teil des Getriebes umschließenden gemeinsamen Gehäuse, mit einer von dem Elektromotor angetriebenen Antriebswelle und einer Abtriebswelle,
b) wobei das Getriebe ein in das Gehäuse einschiebbares in sich komplettes Einsteckgetriebe ist,
c) wobei das Getriebe einstufig mit feststehendem Hohlrad, mit einem Planetenradträger und Planetenrädern ausgebildet ist,
d) wobei ein radial innen in das Gehäuse einschiebbares Teil das feststehende Hohlrad aufweist,
e) wobei ein mit der Antriebswelle verbundenes Ritzel die mit dem Hohlrad kämmenden Planetenräder und damit den Planetenradträger antreibt, welcher mit der Abtriebswelle direkt verbunden ist,
f) wobei zwei Abschlußkappen vorgesehen sind, die zwischen sich in Axialrichtung gesehen das einstufige Getriebe aufnehmen und mit einem Lager für die Abtriebswelle versehen sind, von denen eine Abschlußkappe motorseitig und die andere Abschlußkappe getriebeabtriebsseitig angeordnet ist, und
g) wobei die getriebeabtriebsseitige Abschlußklappe und das das Hohlrad tragende Teil mit dem Gehäuse verbunden sind sind.

Weiterhin zeigt die CH-A-116 668 eine ähnliche Motor-Getriebe-Einheit, bei der An- und Abtriebswelle über Wälzlager in der zugehörigen Abschlußkappe gelagert sind, und wobei die getriebeausgangsseitige Abschlußkappe zentrierend in das Motorgehäuse eingreift.

Eine Motor-Getriebe-Einheit soll so ausgebildet werden, daß bei kompakter Bauweise und guter Standfestigkeit der Einheit wahlweise ein- oder zweistufige Getriebe einsetzbar sind.

Dieses Ziel wird erfindungsgemäß mit einer Ausführung nach dem Anspruch 1 bzw. z erreicht.

Zweckmäßige Ausgestaltungen dieser Erfindung sind Gegenstand der Unteransprüche.

Durch die nahezu vollständige Einsteckbarkeit des einstufigen Getriebes in das gemeinsame Gehäuse kann dieses eine für eine gute Standfestigkeit ausreichende Länge erhalten. Hierdurch ist es wiederum möglich, das Getriebe sowohl in ein- als auch in zweistufiger Ausführung allein in dem gemeinsamen Gehäuse abzustützen. Insgesamt ist die Motor-Getriebe-Einheit jedoch noch so kompakt, daß sie abtriebsseitig an ein Getriebe- oder Antriebsaggregat einfach anflanschbar ist.

Ausführungsbeispiele sind in der Zeichnung dargestellt. Es zeigen
- Fig. 1: einen Längsschnitt durch eine Motor-Getriebe-Einheit mit einem einstufigen Getriebe,

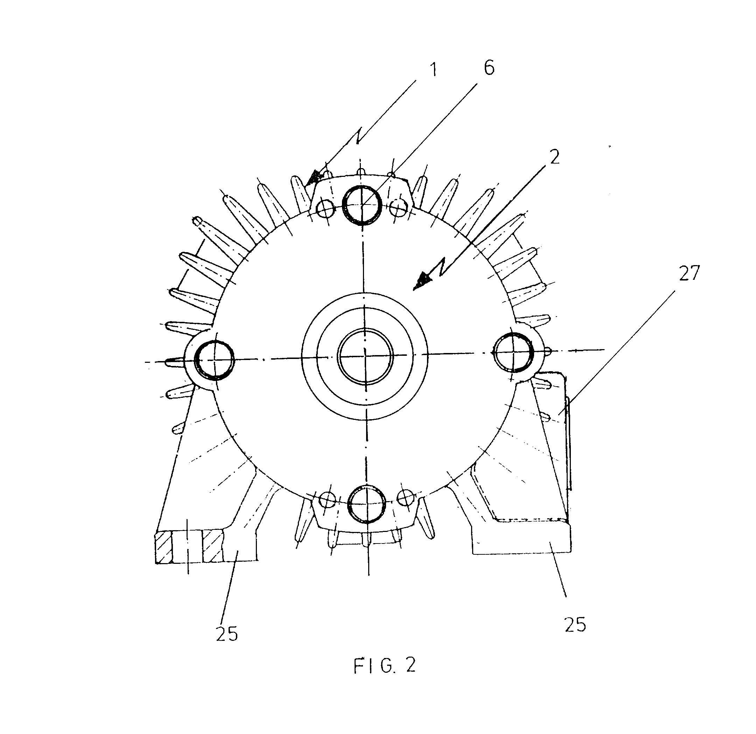

- Fig. 2: eine Seitenansicht auf die Motor-Getriebe-Einheit
- Fig. 3: einen Längsschnitt durch ein zweistufiges Einsteckgetriebe.
- Fig. 4: eine Ansicht auf eine Motor-Getriebe- Einheit mit eingestecktem Getriebe

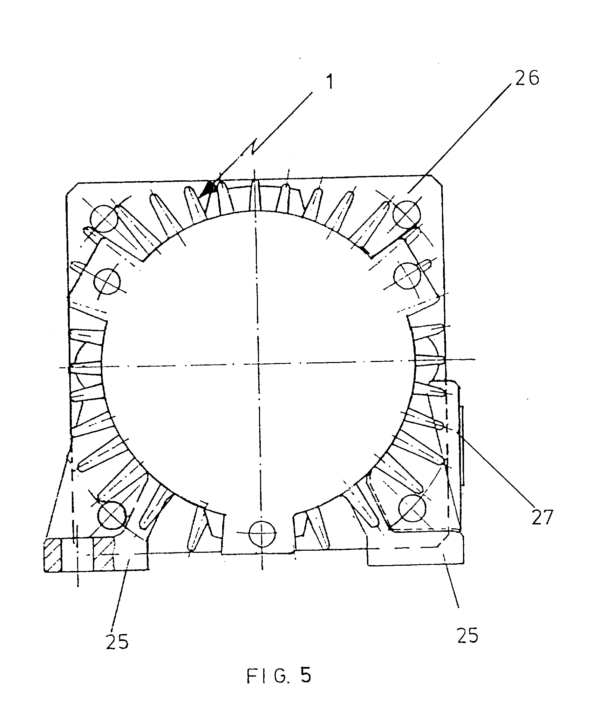

- Fig. 5: eine Seitenansicht auf die Motor-Getriebe-Einheit nach Fig. 4

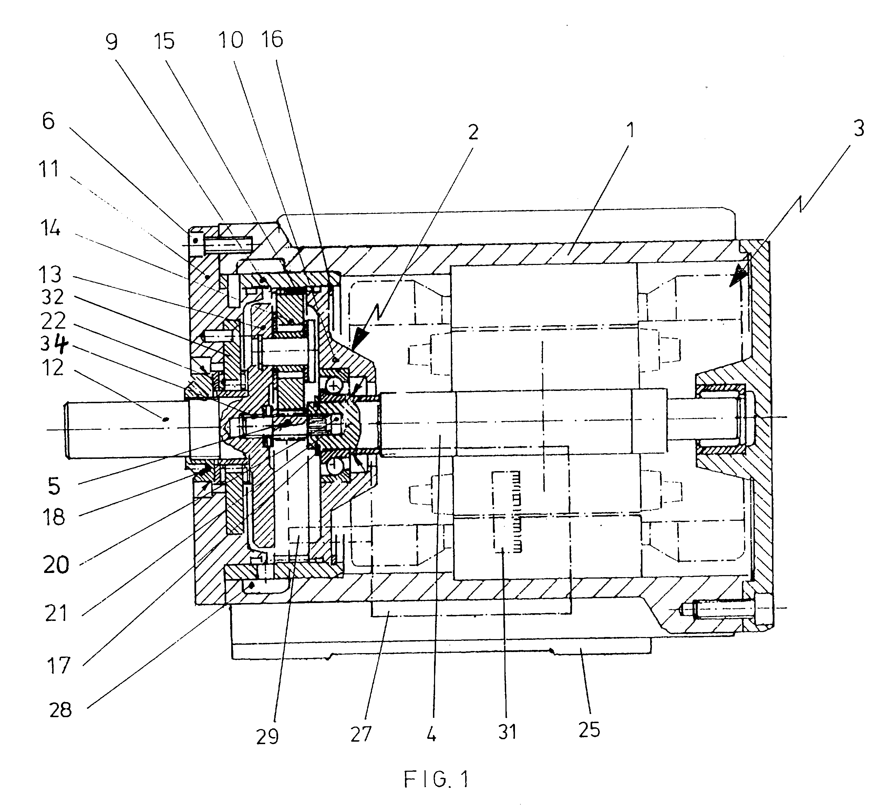

Bei der Ausführung nach Fig. 1 sind in einem gemeinsamen Gehäuse 1 austauschbar einsetzbar ein Planetengetriebe 2 sowie ein Elektromotor 3. Der Elek-tromotor 3 greift mit seiner Antriebswelle 4 direkt in das Planetengetriebe 2 ein, wobei an dem Ende der Antriebswelle 4 ein Antriebsritzel 5 aufgesetzt ist. Auf die besondere Art der Befestigung des Antriebsritzels 5 an der Antriebswelle 4 wird weiter unten noch näher eingegangen werden.

Das Planetengetriebe 2 ist in das Gehäuse 1 eingesteckt und an diesem über Schrauben 6 angeflanscht.

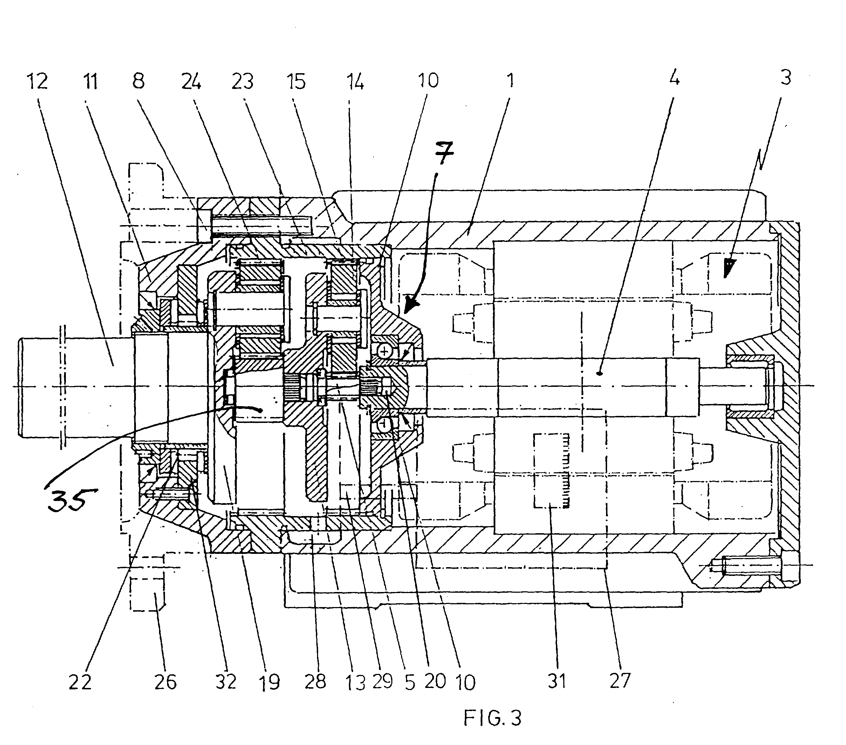

Das einstufige Planetengetriebe 2 ist durch ein zweistufiges Planetengetriebe 7 nach Fig. 3 ohne Veränderung des Gehäuses 1 austauschbar. Auch das Planetengetriebe 7 wird über entsprechende Schrauben 8 an das Gehäuse 1 angeflanscht.

Beide Getriebe 2 und 7 besitzen jeweils ein eigenes Gehäuse, das sich zusammensetzt aus einem äußeren Ring 9 bzw. 23 und stirnseitigen Kappen 10 und 11, die in den Ansprüchen als Abschlußkappen bezeichnet sind. Von diesen Kappen ist die Kappe 11 als das Getriebe an dem Gehäuse 1 fixierender Flansch ausgebildet und lagert zentral die Abtriebswelle 12.

Die Kappe 10 ist in den Ring 9 eingeschoben und lagert zentral die als Antriebswelle 4 des Getriebes fungierende Elektro-Motorwelle.

Zwischen An- und Abtriebswelle erfolgt die Übersetzung bei einem einstufigen Getriebe über in einem Planetenradträger 13 gelagerte Planetenräder 14. Letztere kämmen in einem im Inneren des Ringes 9 eingearbeiteten Hohlrad 15. Fest mit dem Planetenradträger 13 verbunden ist die Abtriebswelle 12. In jeder Getriebestufe arbeitet zweckmäßigerweise jeweils nur ein Paar gegenüberliegender Planetenräder.
Der Planetenradträger 13 ist zusammen mit der Abtriebswelle 12 über eine Axial-Radial-Lagerkombination 22 axial und radial fixiert gelagert. Die Lagerung in der Kappe 11 erfolgt dabei über eine an diese angeschraubte Ringscheibe 32, die axial von zwei Axiallagern der Lagerkombination 22 eingeschlossen wird.

Die Kappe 10 ist zum Elektromotor 3 hin axial über einen Sprengring 16 fixiert. Indem die rotierenden Getriebeteile axial gegeneinander abgestützt sind, ist die Kappe 10 axial in beiden Richtungen festgelegt, indem sie über einen weiteren Sprengring 17 gegenüber der Antriebswelle 4 fixiert ist. Axial verspannt ist das Getriebe über einen auf die Abtriebswelle 12 aufgeschraubten Gewindering 18.

Bei dem zweistufigen Getriebe 7 nach Fig. 3 ist noch ein zweiter Planetenradträger 19 vorgesehen. Dessen Planetenräder kämmen in einem in einem Gehäuse-Ring 23 dieses Getriebes vorgesehenen zweiten Hohlrad 24, dessen Umfangskonfiguration mit derjenigen des ersten Hohlrades 9 für den ersten Planetenradträger 13 übereinstimmt. Die gleiche Konfiguration der beiden Hohlräder ermöglicht deren gemeinsame Herstellung in einem Arbeitsgang.

Durch das Vorsehen eines gemeinsamen Außengehäuses für den Elektromotor 3 und das jeweilige Einsteckgetriebe 2 oder 7 ergibt sich ein relativ breites standfestes Gehäuse, das sicher über Tragfüße 25 ortsfest montiert werden kann.

Getriebeabtriebsseitig kann an die Gehäusekappe 11 ein Flansch 26 zur Befestigung eines durch die Abtriebswelle 12 anzutreibenden Teils angeformt sein. In diesem Fall kann das Antriebsrad für das anzutreibende Teil, das insbesondere ein Getriebe sein kann, direkt fest mit der Abtriebswelle 12 verbunden sein, da diese in der Lagerkombination 22 ausreichend sicher und stabil gelagert ist.

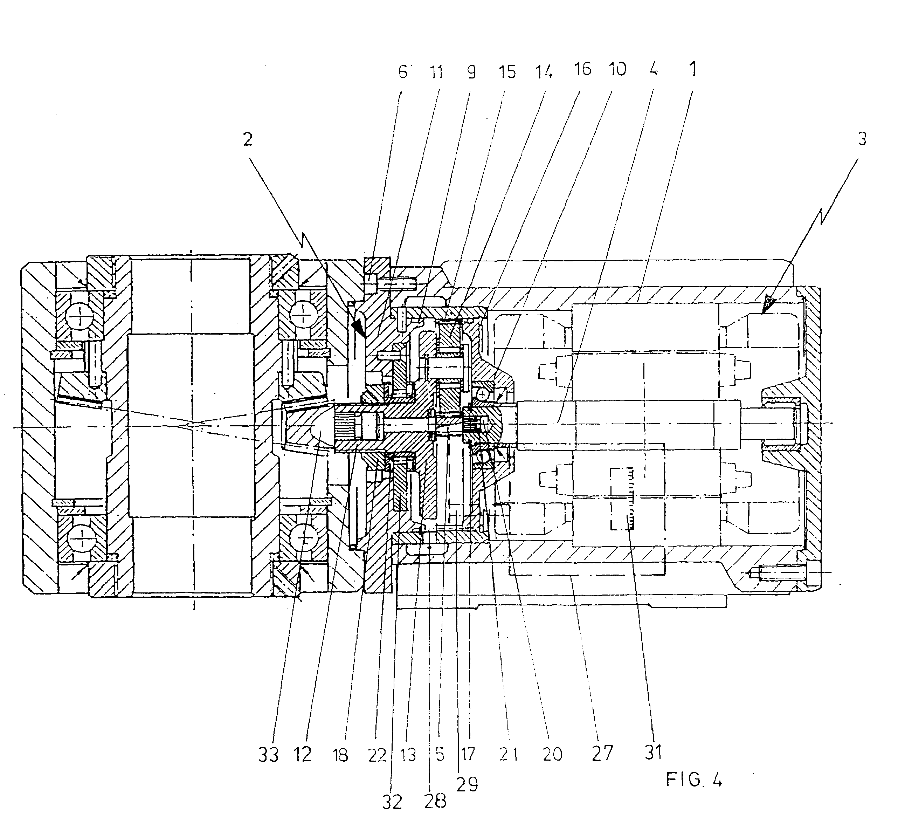

Ein Beispiel für ein angeflanschtes anzutreibendes Teil zeigt die Fig. 4, bei der dieses Teil ein Kegel-Winkelgetriebe ist. Das Kegel-Antriebsritzel 33 des angeflanschten Winkelgetriebes ist fest mit der Abtriebswelle 12 der Motor-Getriebe-Einheit verbunden, indem es form- und kraftschlüssig in die hierfür hohl ausgebildete Abtriebswelle 12 eingreift.

Für eine insgesamt kompakte Bauweise der Motor-Getriebe-Einheit ist es wichtig, die einzelnen Elemente des Planetengetriebes möglichst raumsparend miteinander zu verbinden. Zu diesem Zweck ist das Antriebsritzel 5 mit einem gerändelten Wellenstumpf versehen. Zur Aufnahme dieses Wellenstumpfes besitzt die Antriebswelle 4 eine zunächst glattflächige Bohrung mit einem dem Kerndurchmesser der Rändelung des Antriebsritzel 5 - Wellenstumpfes entsprechenden Durchmesser. Das Zusammenfügen erfolgt dadurch, daß der Wellenstumpf formschlüssig in die Bohrung der Antriebswelle 4 eingepresst wird. Bei diesem Einpressvorgang wirkt der Wellenstumpf praktisch als Werkzeug für die Erzeugung der formschlüssigen Gegenform in der Bohrung der Antriebswelle 4 . Um dem Wellenstumpf in der Bohrung eine bessere Führung zu geben, ist dieser an seinem in die Bohrung einzuführenden Ende zunächst mit einem glatten Schaftabschnitt 20 dem Durchmesser der Bohrung entsprechend versehen. Zwischen dem glatten Schaftabschnitt 20 und dem gerändelten Bereich des Wellenstumpfes ist eine Ringnut 21 vorgesehen, und diese hat den Zweck, beim Einpressen des Wellenstumpfes abgetragenes Material aus dem Bohrungsumfang der Abtriebswelle aufzunehmen. Der glatte Schaftbereich 20 kann in der Bohrung der Antriebswelle einen Schrumpfsitz erhalten. Zu diesem Zweck ist das Bohrungsende der Antriebswelle 4 beim Einfügen des Wellenstumpfes des Ritzels 5 auf einer diesem gegenüber höheren Temperatur zu halten.

Die Fügetechnik, mit der das Ritzel 5 mit der Antriebswelle 4 verbunden ist, wird in gleicher Weise bei einem zweistufigen Getriebe für das Zusammenfügen der beiden Planetenradträger 13 und 19 angewendet. Bei einem an die Motor-Getriebe-Einheit beispielsweise gemäß der Ausführung in Fig. 4 angeflanschten Winkelgetriebe kann das Antriebsritzel 33 des angeflanschten Getriebes ebenfalls nach der gleichen Fügetechnik mit der Abtriebswelle 12 verbunden sein.

Um bei einer kompakten Ausführung des erfindungsgemäßen Getriebes genügend Schmieröl zur Verfügung zu haben, kann außerhalb des Motor-Getriebe-Gehäuses ein Zusatz-Schmierölbehälter 27 vorgesehen sein. Da das Gehäuse 1 der Motor-Getriebe-Einheit eine zylindrische Grundform aufweist, ist es möglich, den Zusatzbehälter an dem Gehäuse 1 geodätisch unten in dem Bereich anzubringen, der in dem durch die zylindrische Gehäuseaußenform horizontal zurückspringenden Raum liegt. Dadurch erhöht sich der Platzbedarf für eine solche Motor-Getriebe-Einheit insgeamt praktisch nicht.

Ein solcher Zusatz-Schmierölbehälter 27 kann beispielsweise aus Kunststoff und einfach an das Gehäuse angeklipst sein. Die Verbindung zwischen dem Zusatzbehälter 27 und dem Inneren des Getriebe erfolgt über in das Gehäuse 1 integrierte Kanäle 28, 29. Dabei wird der Kanal 28 von einer in das Gehäuse eingeformten und dem jeweiligen Getriebering 9,23 abgedeckten Ringnut gebildet. Geodätisch unten ist das Getriebeinnere über eine Bohrung mit dem Kanal 28 verbunden. Die Ringnut des Gehäuses 1 zur Bildung des Kanals 28 ist in dem Gehäuse 1 axial so angebracht, daß hierüber der Ölaustausch sowohl bei einem ein- als auch bei einem zweistufigen Getriebe erfolgen kann. Hierzu ist es lediglich erforderlich, daß die Bohrung bei den Ringen 9 bzw.23 jeweils mit Bezug auf das Gehäuse 1 an der gleichen Position liegt.

Nach dem Prinzip kommunizierender Röhren kann das Öl aus dem Zusatzbehälter 27 in das Getriebeinnere nachfließen, sobald der Ölstand dort abfällt und zwar insbesondere zur Ölnachführung bei im Getriebebetrieb wegen des umlaufenden Schmieröles abfallenden Ölstandes.

Der Schmieröl-Zusatzbehälter 27 kann mit einer Ölstandskontrolleinrichtung 31 ausgerüstet sein. Diese kann ein Sichtfenster oder ein insgesamt durchsichtiger Behälter mit jeweils einer Skala sein. Auch kann der Zusatzbehälter 27 erdanziehungsmäßig oben mit einer Entlüftungseinrichtung versehen sein.

Die erfindungsgemäß aufgebaute Motor-Getriebe-Einheit ermöglicht es, relativ hohe Drehmomente aus kleinen hochdrehenden Elektromotoren zu erzeugen. Durch den wahlweisen Einsatz eines ein- oder zweistufigen Planetengetriebes läßt sich mit dem gleichen Elektromotor getriebeabtriebsseitig eine große Spanne unterschiedlich großer Drehmomente erzielen. Bereits mit einem einstufigen Getriebe lassen sich durch die Wahl unterschiedlicher Übersetzungsverhältnisse mit dem gleichen Elektromotor unterschiedlich große Getriebe-Abtriebsdrehmomente erzielen. In ein und das gleiche Gehäuse einer Motor-Getriebe-Einheit können auch unterschiedliche Elektromotoren mit insbesondere unterschiedlicher Polzahl eingesetzt werden. Einsetzbar sind insbesondere Gleich- und Drehstrommotoren. Die Motor-Getriebe-Einheit besitzt einen Aufbau, der gleichermaßen eine Stand- und Anflanschfixierung ermöglicht.

Bei einer Veränderung des Übersetzungsverhältnisses eines ein- oder zweistufigen Getriebes können die Hohlräder jeweils unverändert bleiben, indem lediglich das bzw. die Ritzel und die Planetenräder verändert werden.

Bei einer Motor-Getriebe-Einheit mit einem einstufigen Planetengetriebe 2 kann das als Sonnenrad dienende Antriebsritzel 5 über ein Nadellager 34 in dem Planetenradträger 13 gelagert sein. Im Zusammenspiel mit der Radial-Axial-Lagerung 22 des mit der Abtriebswelle 12 fest verbundenen Planetenradträgers 13 ist es dann möglich, das Planetengetriebe 2 mit nur zwei Planetenrädern 14 bzw. sogar mit nur einem einzigen Planetenrad 14 auszurüsten. Bei nur einem Planetenrad 14 ist allerdings ein Gewichtsausgleich an dem Planetenradträger 13 vorzusehen. Durch eine Verminderung der Planetenräder 14 auf nur zwei können bei gleichem Bauvolumen durchmessermäßig größere Planetenräder 14 eingesetzt werden. Dadurch erhöht sich das in einer Stufe bei geringtsmöglichem Bauvolumen erreichbare Übersetzungsverhältnis. Bei Verwendung nur noch eines Planetenrades 14 ist zwar keine weitere Erhöhung des Übersetzungsverhältnisses mehr möglich, aber es können in diesem Fall die Kosten des zweiten Planetenrades eingespart werden. Darüber hinaus kann die in dem Planetengetriebe anfallende Reibung herabgesetzt werden.

## Patentansprüche

1. Motor-Getriebe-Einheit
a) mit einem von einem Elektromotor angetriebenen Planeten-Zahnrad-Getriebe, mit einem den Motor und das Getriebe (2) umschließenden gemeinsamen Gehäuse, das als Standgehäuse mit Tragfüßen (25) und/oder abtriebsseitiges Anflanschgehäuse ausgebildet ist, mit einer von dem Elektromotor angetriebenen Antriebswelle (4) und einer Abtriebswelle (12),
b) wobei das Getriebe ein in das Gehäuse (1) einschiebbares in sich komplettes Einsteckgetriebe ist,
c) wobei das Getriebe einstufig mit feststehendem Hohlrad (15), mit einem Planetenradträger (13) und Planetenrädern (14) ausgebildet ist,
d) wobei ein in das Gehäuse (1) einschiebbarer Einschiebe-Ring (9) das feststehende Hohlrad aufweist,
e) wobei ein mit der Antriebswelle verbundenes Ritzel (5) die mit dem Hohlrad kämmenden Planetenräder und damit den Planetenradträger antreibt, welcher mit der Abtriebswelle direkt verbunden ist,
f) wobei zwei Abschlußkappen (10, 11) als Bestandteil des kompletten Einsteckgetriebes vorgesehen sind, die zwischen sich in Axialrichtung gesehen das einstufige Getriebe aufnehmen und mit Lagern für die An- und Abtriebswelle versehen sind, von denen eine Abschlußkappe (10) motorseitig und die andere Abschlußkappe (11) getriebeabtriebsseitig angeordnet ist, und
g) wobei die getriebeabtriebsseitige Abschlußklappe (11) und der Einschiebe-Ring (9) mit dem Gehäuse verspannt sind.

2. Motor-Getriebe-Einheit
a) mit einem von einem Elektromotor angetriebenen Planeten-Zahnrad-Getriebe, mit einem den Motor und zumindest einen Teil des Getriebes umschließenden gemeinsamen Gehäuse, das als Standgehäuse mit Tragfüßen (25) und/oder abtriebsseitiges Anflanschgehäuse ausgebildet ist, mit einer von dem Elektromotor angetriebenen Antriebswelle (4) und einer Abtriebswelle (12),
b) wobei das Getriebe ein in das Gehäuse (1) einschiebbares in sich komplettes Einsteckgetriebe ist,
c) wobei das Getriebe zweistufig mit feststehendem ersten und zweiten Hohlrad (15,24), mit erstem und zweitem Planetenradträger (13, 19) und ersten und zweiten Planetenrädern ausgebildet ist,
d) wobei ein in das Gehäuse (1) einschiebbarer Einschiebe-Ring (23) die feststehenden Hohlräder aufweist,
e) wobei ein mit der Antriebswelle verbundenes Ritzel (5) die mit dem ersten Hohlrad (15) kämmenden Planetenräder und damit den ersten Planetenradträger (13) antreibt, welcher ein Ritzel (35) trägt, über das der zweite Planetenradträger (19) angetrieben wird, welcher mit der Abtriebswelle direkt verbunden ist,
f) wobei zwei Abschlußkappen (10, 11) als Bestandteil des kompletten Einsteckgetriebes vorgesehen sind, die zwischen sich in Axialrichtung gesehen das zweistufige Getriebe aufnehmen und mit Lagern für die An- und Abtriebswelle versehen sind, von denen eine Abschlußkappe (10) motorseitig und die andere Abschlußkappe (11) getriebeabtriebsseitig angeordnet ist, und
g) wobei die getriebeabtriebsseitige Abschlußklappe (11) und der Einschiebe-Ring (23) mit dem Gehäuse verspannt sind.

3. Motor-Getriebe-Einheit nach Anspruch 1 oder 2, **dadurch gekennzeichnet,** daß das als Standgehäuse ausgebildete Gehäuse mit axial jeweils endseitig gelegenen Tragfüßen (25) versehen ist.

4. Motor-Getriebe-Einheit nach einem der vorhergehenden Ansprüche, **dadurch gekennzeichnet**, daß die fest mit dem abtriebsseitigen Planetenradträger (13, 19) verbundene Abtriebswelle über getrennte Axial- und Radiallager (22) axial/radial fixiert in der zugehörigen Abschlußkappe (11) gelagert ist.

5. Motor-Getriebe-Einheit nach Anspruch 4, **gekennzeichnet** durch die Merkmale: zwei Axiallager umschließen ein Radiallager, das Radiallager stützt sich in dem Gehäuse (1) auf einer lösbar mit der Abschlußkappe (11) verbundenen Ringscheibe (32) ab, die Axiallager greifen beidseitig der Ringscheibe an, die Axiallager sind über einen von dem Ende der Abtriebswelle auf diese aufgebrachten Gewindering (18) gegen die Ringscheibe gespannt.

6. Motor-Getriebe-Einheit nach Anspruch 5, **dadurch gekennzeichnet,** daß die Axiallager und das Radiallager Wälzlager sind.

7. Motor-Getriebe-Einheit nach Anspruch 6, **dadurch gekennzeichnet,** daß die Axiallager Rollenlager sind.

8. Motor-Getriebe-Einheit nach einem der vorhergehenden Ansprüche, **dadurch gekennzeichnet,** daß die als Sonnenrad dienenden Ritzel (5, 35) jeweils in den angrenzenden Planetenradträgern (13, 19) wälzgelagert sind.

9. Motor-Getriebe-Einheit nach einem der vorhergehenden Ansprüche, **dadurch gekennzeichnet,** daß die Abtriebswelle (12) Träger für ein direkt mit diesem verbundenes Antriebsrad (33) eines angeflanschten Getriebes oder Getriebeaggregates ist.

## Claims

1. Motor gear system unit
a) with a planetary gear system driven by an electric motor, with a common housing which surrounds the motor and the gear system (2) and is designed as a standing housing with carrying feet (25) and/or an output-side flanged housing, with a driving shaft (4) driven by the electric motor and an output shaft (12),
b) wherein the gear system is a push-in gear system which is complete in itself and can be inserted into the housing (1),
c) wherein the gear system is designed in one stage with a stationary ring gear (15), with a planetary gear carrier (13) and planetary gears (14),
d) wherein an insertion ring (9) which can be inserted into the housing (1) has the stationary ring gear,
e) wherein a pinion (5) connected to the driving shaft drives the planetary gears meshing with the ring gear and therefore the planetary gear carrier which is directly connected to the output shaft,
f) wherein two covering caps (10, 11) are provided as a component of the complete push-in gear system, which receive the single-stage gear system between themselves, as viewed in the axial direction, and are provided with bearings for the driving and output shaft, of which one covering cap (10) is arranged on the motor side and the other covering cap (11) is arranged on the gear output side, and
g) wherein the gear output side covering cap (11) and the insertion ring (9) are secured to the housing.

2. Motor gear system unit
a) with a planetary gear system driven by an electric motor, with a common housing which surrounds the motor and at least a part of the gear system and is designed as a standing housing with carrying feet (25) and/or an output-side flanged housing, with a driving shaft (4) driven by the electric motor and an output shaft (12),
b) wherein the gear system is a push-in gear system which is complete in itself and can be inserted into the housing (1),
c) wherein the gear system is designed in two stages with a stationary first and second ring gear (15, 24), with a first and second planetary gear carrier (13, 19) and first and second planetary gears,
d) wherein an insertion ring (23) which can be inserted into the housing (1) has the stationary ring gears,
e) wherein a pinion (5) connected to the driving shaft drives the planetary gears meshing with the first ring gear (15) and therefore the first planetary gear carrier (13) which carries a pinion (35) by means of which there is driven the second planetary gear carrier (19) which is directly connected to the output shaft,
f) wherein two covering caps (10, 11) are provided as a component of the complete push-in gear system, which receive the two-stage gear system between themselves, as viewed in the axial direction, and are provided with bearings for the driving and output shaft, of which one covering cap (10) is arranged on the motor side and the other covering cap (11) is arranged on the gear output side, and
g) wherein the gear output side covering cap (11) and the insertion ring (9) are secured to the housing.

3. Motor gear system unit according to Claim 1 or 2, characterized in that the housing designed as a standing housing is provided with carrying feet (25) which are located axially at the end in each case.

4. Motor gear system unit according to one of the preceding claims, characterized in that the output shaft connected rigidly to the output-side planetary gear carrier (13, 19) is mounted in the associated covering cap (11) with axial/radial fixing via separate axial and radial bearings (22).

5. Motor gear system unit according to Claim 4, characterized by the features: two axial bearings surround a radial bearing, the radial bearing is supported in the housing (1) on an annular disc (32) which is detachably connected to the covering cap (11), the axial bearings act on both sides of the annular disc, the axial bearings are tensioned against the annular disc by a ring nut (18) applied to the output shaft from the end of the output shaft.

6. Motor gear system unit according to Claim 5, characterized in that the axial bearings and the radial bearing are rolling bearings.

7. Motor gear system unit according to Claim 6, characterized in that the axial bearings are roller bearings.

8. Motor gear system unit according to one of the preceding claims, characterized in that the pinions (5, 35) acting as a sun gear are mounted by rolling bearings in the adjoining planetary gear carriers (13, 19) in each case.

9. Motor gear system unit according to one of the preceding claims, characterized in that the output shaft (12) is a carrier for a driving gear (33), directly connected thereto, of a flanged gear system or gear system assembly.

## Revendications

1. Groupe moteur-engrenage comprenant :
a) un engrenage planétaire entraîné par un moteur électrique, un carter commun enveloppant le moteur et l'engrenage (2), configuré en carter stationnaire avec des pieds de support (25) et/ou en carter à bride du côté sortie, un arbre d'entraînement (4) entraîné par le moteur électrique et un arbre de sortie (12),
b) l'engrenage étant un engrenage à emboîter en soi complet pouvant être introduit dans le carter (1),
c) l'engrenage étant prévu à un étage avec une roue à denture intérieure fixe (15), un porte-pignons satellites (13) et des roues planétaires (14),
d) une bague à emboîtage (9) pouvant être engagée dans le carter (1) comprenant la roue à denture intérieure fixe,
e) un pignon (5) couplé avec l'arbre moteur entraînant les roues planétaires coopérant avec la roue à denture intérieure et donc le porte-pignons satellites lequel est couplé directement avec l'arbre de sortie,
f) deux capots de recouvrement (10, 11) étant prévus comme éléments constitutifs de l'engrenage à emboîter complet, qui, vu dans le sens axial, reçoivent entre eux l'engrenage à un étage et sont pourvus de paliers pour les arbres d'entraînement et de sortie, l'un desdits capots de recouvrement (10) étant disposé du côté moteur et l'autre capot de recouvrement (11), du côté sortie de l'engrenage, et
g) le capot de recouvrement (11) situé du côté sortie de l'engrenage et la bague à emboîtage (9) étant rattachés au carter.

2. Groupe moteur-engrenage comprenant :
a) un engrenage planétaire entraîné par un moteur électrique, un carter commun enveloppant le moteur et au moins une partie de l'engrenage, configuré en carter stationnaire avec des pieds de support (25) et/ou en carter à bride du côté sortie, un arbre d'entraînement (4) entraîné par le moteur électrique et un arbre de sortie (12),
b) l'engrenage étant un engrenage à emboîter en soi complet pouvant être introduit dans le carter (1),
c) l'engrenage étant prévu à deux étages avec une première et une seconde roues à denture intérieure (15, 24) fixes, un premier et un second porte-pignons satellites (13, 19) et une première et une seconde roues planétaires,
d) une bague à emboîtage (23) pouvant être engagée dans le carter (1) comprenant les roues à denture intérieure fixes,
e) un pignon (5) couplé avec l'arbre moteur entraînant les roues planétaires coopérant avec la première roue à denture intérieure (15) et donc le premier porte-pignons satellites (13) lequel porte un pignon (35) par l'intermédiaire duquel est entraîné le second porte-pignons satellites (19) qui est couplé directement avec l'arbre de sortie,
f) deux capots de recouvrement (10, 11) étant prévus comme éléments constitutifs de l'engrenage à emboîter complet, qui, vu dans le sens axial, reçoivent entre eux l'engrenage à deux étages et sont pourvus de paliers pour les arbres d'entraînement et de sortie, l'un des capots de recouvrement (10) étant disposé du côté moteur et l'autre capot de recouvrement (11), du côté sortie de l'engrenage, et
g) le capot de recouvrement (11) situé du côté sortie de l'engrenage et la bague à emboîtage (23) étant rattachés au carter.

3. Groupe moteur-engrenage selon la revendication 1 ou 2, caractérisé en ce que le carter conformé en carter stationnaire est pourvu de pieds de support (25) respectivement situés du côté des extrémités axiales.

4. Groupe moteur-engrenage selon l'une des revendications précédentes, caractérisé en ce que l'arbre de sortie solidaire du porte-pignons satellites (13, 19) situés du côté sortie, est bloqué axialement/radialement dans le capot de recouvrement (11) associé par des paliers de butée et roulements à billes (22) séparés.

5. Groupe moteur-engrenage selon la revendication 4, caractérisé par les particularités suivantes : deux paliers de butée enferment un roulement à billes, le roulement à billes s'appuie dans le carter (1) sur un disque annulaire (32) rattaché de manière amovible au capot de recouvrement (11), les paliers de butée agissent de part et d'autre du disque annulaire, les paliers de butée sont bloqués contre le disque annulaire par l'intermédiaire d'une bague filetée (18) montée sur l'arbre de sortie à partir de l'une des extrémités de celui-ci.

6. Groupe moteur-engrenage selon la revendication 5, caractérisé en ce que les paliers de butée et le roulement à billes sont des paliers à roulement.

7. Groupe moteur-engrenage selon la revendication 6, caractérisé en ce que les paliers de butée sont des roulements à rouleaux.

8. Groupe moteur-engrenage selon l'une des revendications précédentes, caractérisé en ce que les pignons (5, 35) servant de roues solaires sont respectivement montés dans des paliers à roulement dans les porte-pignons satellites (13, 19) contigus.

9. Groupe moteur-engrenage selon l'une des revendications précédentes, caractérisé en ce que l'arbre de sortie (12) constitue le support d'une roue d'entraînement (33) d'un engrenage ou groupe d'engrenages bridé, couplée directement avec ledit support.
